# EUROPEAN PATENT SPECIFICATION

(11) **EP 2 765 472 B1**
(45) Date of publication and mention of the grant of the patent: **24.08.2016**
(21) Application number: 13188780.4
(22) Date of filing: 15.10.2013
(51) Int. Cl.: G05F 1/67, H02J 3/38

(54) **Boost unit, power conditioner, photovoltaic system, program, and voltage tracking method**
Aufwärtswandler, Inverter, Photovoltaikanlage, Programm und Spannungsverfolgungsverfahren
Unité de survoltage, onduleur, système photovoltaïque, programme et procédé de suivi de tension

(30) Priority: 08.02.2013 JP 2013023197
(43) Date of publication of application: 13.08.2014
(73) Proprietor: OMRON CORPORATION, Kyoto-shi, Kyoto 600-8530 (JP)
(72) Inventor: Nakamura, Kotaro, Kyoto-shi, Kyoto 600-8530 (JP); Tsubota, Yasuhiro, Kyoto-shi, Kyoto 600-8530 (JP); Mabuchi, Masao, Kyoto-shi, Kyoto 600-8530 (JP); Nakai, Takuya, Kyoto-shi, Kyoto 600-8530 (JP); Ohashi, Katsumi, Kyoto-shi, Kyoto 600-8530 (JP)
(74) Representative: Kilian Kilian & Partner

(56) References cited:
- EP-A1- 2 390 751
- WO-A2-2010/071855
- WO-A2-2012/020103

## Description

### TECHNICAL FIELD

The present invention relates to a boost unit, a power conditioner, a photovoltaic system, a program, and a voltage tracking method.

### RELATED ART

In Japanese Unexamined Patent Publication No. 2003-134667, Maximum Power Point Tracking control (MPPT control) is performed such that an output becomes a maximum power point in each block of a photovoltaic panel by a boost chopper.

For example, at least two photovoltaic strings, which are installed on an east side and a west side, respectively, to exert different power characteristics, are occasionally connected in parallel to one boost circuit such as the boost chopper. In such cases, because occasionally there is more than one input voltage at the boost circuit at which combined power of at least the two photovoltaic strings inputted to the boost circuit becomes maximum, occasionally the input voltage at the boost circuit at which the combined power of at least the two photovoltaic strings is maximized cannot be tracked by the MPPT control. WO 2012/020103 A2 discloses another MPPT control triggered based on the temporal derivative of the power exceeding a thershold and comprising all the features of the preamble of claim 1.

### SUMMARY

In accordance with a first aspect of the present invention, a boost unit includes: a first boost circuit; a voltage tracking unit configured to track an input voltage at the first boost circuit at which output power of the first boost circuit is maximized while changing the input voltage at the first boost circuit; and a voltage identification unit configured to identify, when a change in input power or output power of the first boost circuit satisfies a predetermined condition, the input voltage at the first boost circuit at which the output power of the first boost circuit is maximized at timing corresponding to the condition. In the boost unit, when the voltage identification unit identifies the input voltage at the first boost circuit at which the output power of the first boost circuit is maximized, the voltage tracking unit tracks the input voltage at the first boost circuit at which the output power of the first boost circuit is maximized while changing the input voltage at the first boost circuit with the identified input voltage at the first boost circuit as a start point.

In the boost unit, the voltage identification unit may identify the input voltage at the first boost circuit at which the output power of the first boost circuit is maximized at the timing corresponding to the predetermined condition when the change in input power or output power of the first boost circuit with respect to the clock time or the change in input power or output power of the first boost circuit with respect to the input voltage at the first boost circuit satisfies the condition.

In the boost unit, the voltage identification unit may identify the input voltage at the first boost circuit at which the output power of the first boost circuit is maximized at the timing based on at least one of a first start clock time and a first end clock time when the first start clock time at which the input voltage at the first boost circuit reaches a first reference voltage is earlier than a reference start clock time and when the first end clock time at which the input voltage at the first boost circuit falls below a second reference voltage is later than a reference end clock time.

The boost unit may further include a second boost circuit. In the boost unit, the reference start clock time may be fixed based on a second start clock time at which the input voltage at the second boost circuit reaches the frst reference voltage, and the reference end clock time may be fixed based on a second end clock time at which the input voltage at the second boost circuit falls below the second reference voltage.

In the boost unit, the voltage identification unit may identify the input voltage at the first boost circuit at which the output power of the first boost circuit is maximized, when the first start clock time is earlier than the reference start clock time, when the first end clock time is later than the reference end clock time, and when the input power of the first boost circuit is less than the input power of the second boost circuit by a first reference difference at a reference intermediate clock time between the reference start clock time and the reference end clock time.

In the boost unit, the voltage identification unit may identify, when an amount of change in input power of the first boost circuit falls within a predetermined reference range in a first time period, the input voltage at the first boost circuit at which the output power of the first boost circuit is maximized at the timing corresponding to the condition.

In the boost unit, the voltage identification unit may identify, when a difference between the input power of the first boost circuit at a predetermined first clock time and the input power of the first boost circuit at a predetermined second clock time earlier than the first clock time is less than or equal to a second reference difference and when a difference between the input power of the first boost circuit at the first clock time and the input power of the first boost circuit at a third clock time earlier than the first clock time is less than or equal to a third reference difference, the input voltage at the first boost circuit at which the output power of the first boost circuit is maximized at the timing corresponding to the condition.

In the boost unit, the voltage identification unit may identify, when a plurality of the input voltages at the first boost circuit, at which the input power or the output power of the first boost circuit is maximized, are detected by changing the input voltage at the first boost circuit, the input voltage at the first boost circuit at which the output power of the first boost circuit is maximized at the timing corresponding to the clock time at which the plurality of input voltages are detected.

In the boost unit, the voltage identification unit may identify the input voltage at the first boost circuit at which the output power of the first boost circuit is maximized by changing the input voltage at the first boost circuit to a lower-limit input voltage from an upper-limit input voltage at the first boost circuit.

In accordance with a second aspect of the present invention, a power conditioner includes: the boost unit; and an inverter configured to convert a direct current outputted from the first boost circuit into an alternating current.

In accordance with a third aspect of the present invention, a photovoltaic system includes: the power conditioner; and at least one photovoltaic string in which the voltage is boosted by the first boost circuit.

In accordance with a fourth aspect of the present invention, a program that causes a computer to execute: a step of tracking an input voltage at a first boost circuit while changing the input voltage at the first boost circuit, output power of the first boost circuit being maximized at the input voltage; a step of identifying, when a change to clock time in input power or output power of the first boost circuit or a change to the input voltage of the first boost circuit in input power or output power of the first boost circuit satisfies a predetermined condition, the input voltage at the first boost circuit at which the output power of the first boost circuit is maximized at timing corresponding to the condition; and a step of tracking, when the input voltage at the first boost circuit at which the output power of the first boost circuit is maximized is identified, the input voltage at the first boost circuit at which the output power of the first boost circuit is maximized while changing the input voltage at the first boost circuit with the identified input voltage at the first boost circuit as a start point.

In accordance with a fifth aspect of the present invention, a voltage tracking method includes: a step of tracking an input voltage at a first boost circuit while changing the input voltage at the first boost circuit, output power of the first boost circuit being maximized at the input voltage; a step of identifying, when a change to clock time in input power or output power of the first boost circuit or a change to the input voltage of the first boost circuit in input power or output power of the first boost circuit satisfies a predetermined condition, the input voltage at the first boost circuit at which the output power of the first boost circuit is maximized at timing corresponding to the condition; and a step of tracking, when the input voltage at the first boost circuit at which the output power of the first boost circuit is maximized is identified, the input voltage at the first boost circuit at which the output power of the first boost circuit is maximized while changing the input voltage at the first boost circuit with the identified input voltage at the first boost circuit as a start point.

All the features necessary for the present invention are not described in the summary of the present invention. A sub-combination of a feature group is also included in the present invention.

### BRIEF DESCRIPTION OF THE DRAWINGS

Fig. 1 is a system configuration diagram illustrating an example of an entire configuration of a photovoltaic system according to an embodiment;
Fig. 2 is a view illustrating examples of output power and output voltages of two photovoltaic strings in the morning and characteristics of an input power and an input voltage of a boost circuit to which combined power is inputted from the two photovoltaic strings;
Fig. 3 is a view illustrating an example of a time change in output power of photovoltaic string of the day;
Fig. 4 is a view illustrating an example of a functional block of an control device; and
Fig. 5 is a flowchart illustrating a boost circuit control procedure of the control device.

### DETAILED DESCRIPTION

Hereinafter, an embodiment of the present invention will be described.

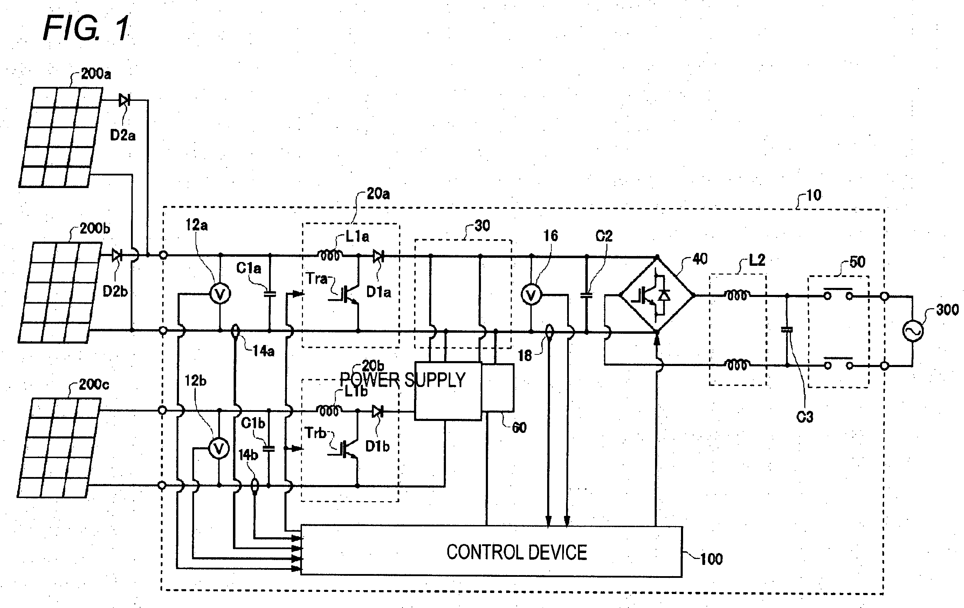

Fig. 1 is a system configuration diagram illustrating an example of an entire configuration of a photovoltaic system of the embodiment. The photovoltaic system includes photovoltaic strings 200a, 200b, and 200c and a power conditioner 10. Each of the photovoltaic strings 200a, 200b, and 200c includes a plurality of photovoltaic modules connected in series or parallel. The photovoltaic strings 200a, 200b, and 200c are examples of the power supply that outputs a DC voltage.

The photovoltaic strings 200a and 200b are connected in parallel to one another through diodes D2a and D2b. For example, the photovoltaic string 200a is installed on a roof on an east side of a building. For example, the photovoltaic string 200b is installed on the roof on a west side of the building. For example, the photovoltaic string 200c is installed on the roof on a south side of the building. The photovoltaic strings 200a, 200b, and 200c may include the identical number of photovoltaic modules having identical specifications.

The power conditioner 10 boosts the DC voltages outputted from the photovoltaic strings 200a, 200b, and 200c, converts the boosted DC voltages into AC voltages, and outputs the AC voltages onto a side of a system power supply 300.

The power conditioner 10 includes capacitors C1a and C1b, boost circuits 20a and 20b, a connection unit 30, a capacitor C2, an inverter 40, a coil L2, a capacitor C3, a connected relay 50, a power supply 60, and a control device 100. In the description of the embodiment, the power conditioner 10 includes the boost circuits 20a and 20b. Alternatively, at least one of the boost circuits 20a and 20b may be provided outside the power conditioner 10. The boost unit may be constructed by the boost circuit 20a or 20b and another control device, such as a microcomputer, which controls a boost operation of the boost circuit 20a or 20b.

Both ends of the capacitor C1a are electrically connected to positive electrode terminals and negative electrode terminals of the photovoltaic strings 200a and 200b, respectively, and the capacitor C1a smoothes the DC voltages outputted from the photovoltaic strings 200a and 200b. The boost circuit 20a includes a coil L1 a, a switch Tra, and a diode D1 a. For example, the boost circuit 20a is what is called a chopper switching regulator.

For example, the switch Tra is an Insulated Gate Bipolar Transistor (IGBT). One end of the coil L1a is connected to one end of the capacitor C1a, and the other end of the coil L1a is connected to a collector of the switch Tra. The collector of the switch Tra is connected to an anode of the diode D1a, and an emitter of the switch Tra is connected to the other end of the capacitor C1a. The coil L1a accumulates energy based on power from the photovoltaic strings 200a and 200b during an on period of the switch Tra, and discharges the energy during an off period of the switch Tra. Therefore, the boost circuit 20a boosts the DC voltages outputted from the photovoltaic strings 200a and 200b. The diode D1 a is provided between the switch Tra and the connection unit 30 to rectify the output from the coil L1 a. The diode D1 a prevents the boosted DC voltage from flowing onto an input side from an output side of the boost circuit 20a.

Both ends of the capacitor C1b are electrically connected to the positive electrode terminal and the negative electrode terminal of the photovoltaic string 200c, respectively, and the capacitor C1 b smoothes the DC voltage outputted from the photovoltaic string 200c.

The boost circuit 20b includes a coil L1b, a switch Trb, and a diode D1b. The boost circuit 20b may be what is called a chopper switching regulator.

For example, the switch Trb is an Insulated Gate Bipolar Transistor (IGBT). One end of the coil L1b is connected to one end of the capacitor C1b, and the other end of the coil L1 a is connected to a collector of the switch Trb. The collector of the switch Trb is connected to the anode of the diode D1 b, and the emitter of the switch Trb is connected to the other end of the capacitor C1 b. The coil L1b accumulates the energy based on the power from the photovoltaic string 200c during the on period of the switch Trb, and discharges the energy accumulated during the off period of the switch Trb. Therefore, the boost circuit 20b boosts the DC voltage output from the photovoltaic string 200c. The diode D1b is provided between the switch Trb and the connection unit 30 to rectify the output from the coil L1b. The diode D1 b prevents the boosted DC voltage from flowing onto the input side from the output side of the boost circuit 20b.

The boost circuits 20a and 20b are not limited to the above configuration. For example, the boost circuits 20a and 20b may be constructed by insulation type boost circuits, such as a half-bridge boost circuit and a full-bridge boost circuit, which have a transformer winding.

The connection unit 30 connects the output side of the boost circuit 20a and the output side of the boost circuit 20b in parallel to each other. The capacitor C2 smoothes the DC voltage outputted from the connection unit 30. The inverter 40 includes a switch, and converts the DC voltages outputted from the boost circuits 20a and 20b into the AC voltages by turning on and off the switch. For example, the inverter 40 may be constructed by a single-phase full-bridge PWM inverter including four bridge-connected semiconductor switches. In one pair out of the four semiconductor switches, the semiconductor switches are connected in series. In the other pair out of the four semiconductor switches, the semiconductor switches are connected in series. The other pair of semiconductor switches is connected in parallel to the one pair of the semiconductor switches.

The coil L2 and the capacitor C3 are provided between the inverter 40 and the system power supply 300. The coil L2 and the capacitor C3 remove a noise from the AC voltage outputted from the inverter 40. The connected relay 50 is provided between the capacitor C3 and the system power supply 300. The power conditioner 10 and the system power supply 300 are electrically connected to each other by turning on the connected relay 50, and the power conditioner 10 and the system power supply 300 are electrically disconnected from each other by turning off the connected relay 50.

For example, the power supply 60 is constructed by a power supply IC chip. The power supply 60 is connected to both the ends of the connection unit 30. The power supply 60 generates power indicating a predetermined voltage value from the DC voltage taken out from the connection unit 30, and supplies the generated power to the control device 100. One of photovoltaic strings 200a, 200b, and 200c outputs the power while the switches Tra and Trb of the boost circuits 20a and 20b are in an off state, and the voltage input to the connection unit 30 through the boost circuit 20a or 20b reaches a reference voltage, thereby starting up the power supply 60. After the start-up, the power supply 60 generates a driving power driving the control device 100 using the voltage input through the connection unit 30, and supplies the driving power to the control device 100.

In order to obtain the maximum power from the photovoltaic strings 200a, 200b, and 200c, the control device 100 controls the switching operations of the boost circuits 20a and 20b and the inverter 40, boosts the DC voltages outputted from the photovoltaic strings 200a, 200b, and 200c, converts the boosted DC voltages into the AC voltages, and outputs the AC voltages onto the side of the system power supply 300.

When being started up by the driving power from the power supply 60, the control device 100 issues an instruction to the boost circuits 20a and 20b to start the boost operation. The boost circuits 20a and 20b continue the boost operation when the voltage input through the photovoltaic string is greater than or equal to a boostable voltage. On the other hand, when the voltage input through the photovoltaic string is less than the boostable voltage, because the photovoltaic string insufficiently outputs the power, the boost circuits 20a and 20b cannot properly perform the boost operation, but tentatively stops the boost operation. The control device 100 periodically issues the instruction to the boost circuits 20a and 20b to start the boost operation until the boost circuits 20a and 20b can continue the boost operation.

The control device 100 individually changes the input voltages at the boost circuits 20a and 20b by individually changing boost ratios of the boost circuits 20a and 20b, and individually tracks the voltages, which are input to the boost circuits 20a and 20b to maximize the power in the connection unit 30, by the MPPT control.

The power conditioner 10 also includes voltage sensors 12a, 12b, and 16 and current sensors 14a, 14b, and 18. The voltage sensor 12a detects a voltage Vabin corresponding to a potential difference at both ends of a parallel connection portion in which the photovoltaic strings 200a and 200b are connected in parallel. The voltage sensor 12b detects a voltage Vcin corresponding to a potential difference at both ends of the photovoltaic string 200c. The voltage sensor 16 detects a voltage Vout corresponding to a potential difference at both ends of the connection unit 30. The current sensor 14a detects a current labin, which passes on the input side of the boost circuit 20a through the parallel connection portion in which the photovoltaic strings 200a and 200b are connected in parallel. The current sensor 14b detects a current Icin, which is outputted from the photovoltaic string 200c and passes on the input side of the boost circuit 20b. The current sensor 18 detects current lout, which is outputted from the boost circuits 20a and 20b and passes through the connection unit 30.

In the photovoltaic system having the above configuration, the control device 100 controls the boost ratios of the boost circuits 20a and 20b such that the power is obtained from the photovoltaic strings 200a, 200b, and 200c as much as possible.

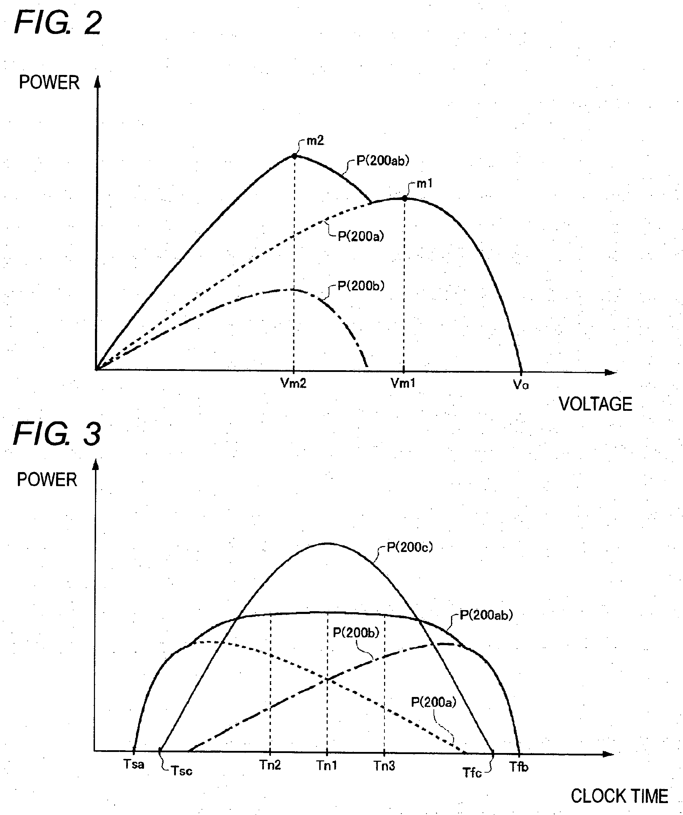

Fig. 2 illustrates an example of the output power and the output voltages of the photovoltaic strings 200a and 200b in the morning and characteristics of the input power and the input voltages of the boost circuit 20a. A dotted line P (200a) illustrates the examples of the characteristics of the output power and the output voltage of the photovoltaic string 200a in the morning. An alternate long and short dash line P (200b) illustrates the examples of the characteristics of the output power and the output voltage of the photovoltaic string 200b in the morning. A solid line P (200ab) illustrates the example of the characteristics of the input power and the input voltage of the boost circuit 20a.

For example, the photovoltaic string 200a is installed on the roof on the east side of the building. For example, the photovoltaic string 200b is installed on the roof on the west side of the building. In such a case, in the morning or the late afternoon, occasionally the output power of one of the photovoltaic strings is less than that of the other photovoltaic string, and two input voltages at the boost circuit 20a emerge (maxima m1 and m2 in Fig. 2) at which the power inputted to the boost circuit 20a is maximized.

In such cases, for example, the control device 100 controls the boost ratio of the boost circuit 20a to gradually decrease the input voltage at the boost circuit 20a from the voltage corresponding to an open voltage Vo at the photovoltaic string 200a, and searches the input voltage at the boost circuit 20a, at which the input power (the output power) of the boost circuit 20a is maximized, by the MPPT control. At this point, the control device 100 searches an input voltage Vm1 corresponding to the maximum m1 in Fig. 2. As a result, the control device 100 tracks the input voltage, at which the output power of the boost circuit 20a is maximized, by the MPPT control while changing the input voltage at the boost circuit 20a around the input voltage Vm1. However, the control device 100 changes the input voltage at the boost circuit 20a around an input voltage Vm2 to be able to maximize the output power of the boost circuit 20a. That is, in the case where at least the two input voltages at the boost circuit 20a at which the power inputted to the boost circuit 20a is maximized emerge, occasionally the control device 100 cannot control the boost ratio of the boost circuit 20a by the MPPT control such that the output power of the boost circuit 20a is maximized.

Therefore, it is conceivable that the control device 100 periodically perform voltage sweep, in which the input voltage at each boost circuit at which the output power of the boost circuit is maximized is identified, by changing the input voltage at the boost circuit to the lower-limit input voltage at which the boost circuit can continue the boost operation from the upper-limit input voltage corresponding to one of the open voltages Vo at the photovoltaic strings connected to the boost circuits.

However, possibly a time period in which the power from the photovoltaic string cannot effectively be used are frequently generated when the voltage sweep is periodically performed.

The plurality of photovoltaic strings are not necessarily connected in parallel to the boost circuit. Occasionally the photovoltaic string that is provided only on the south side, the east side, or the west side of the building is connected to the boost circuit. For the boost circuit that is connected to the one photovoltaic string provided only on the south side, the east side, or the west side of the building, probably a plurality of input voltages at the boost circuit, at which the power inputted to the boost circuit is maximized, do not emerge. Accordingly, depending on a condition of the photovoltaic string connected to the boost circuit, the power obtained from the photovoltaic string is not necessarily effectively increased by performing the voltage sweep.

Therefore, the control device 100 may estimate which orientation the photovoltaic string connected to each boost circuit is connected based on the change in input power or output power of each boost circuit. The control device 100 may estimate which orientation the photovoltaic string connected to each boost circuit is connected based on the change in input power or output power of each boost circuit with respect to a clock time or the change in input power or output power of each boost circuit with respect to the input voltage at the boost circuit. The control device 100 may estimate or detect whether the plurality of the input voltages at the boost circuit, at which the input voltage at each boost circuit is maximized, emerge. In a time period having a high probability that the plurality of the maximized input voltages emerge, the control device 100 performs the voltage sweep to the boost circuit having the high probability that the plurality of the input voltages, at which the input power is maximized, emerge.

Based on the change in input power or output power of each boost circuit, the control device 100 may identify the boost circuit to which the voltage sweep should be performed, and identify the time period to which the voltage sweep should be performed to the identified boost circuit. Based on the change in input power or output power of each boost circuit with respect to the clock time or the change in input power or output power of each boost circuit with respect to the input voltage at the boost circuit, the control device 100 may identify the boost circuit to which the voltage sweep should be performed, and identify the time period to which the voltage sweep should be performed to the identified boost circuit. The control device 100 may determine whether the boost circuit, in which the plurality of the input voltages at which the input power is maximized emerge, exist by performing the voltage sweep to each boost circuit during an initial operation. The control device 100 identifies the boost circuit, in which the plurality of the input voltages at which the input power is maximized emerge, as the boost circuit to which the voltage sweep should be performed, and the control device 100 may perform the voltage sweep to the identified boost circuit even after the initial operation. Alternatively, the operation of the control device 100 may be set at a stage at which the power conditioner is installed such that the voltage sweep is performed to the boost circuits to which the photovoltaic strings installed on the roofs of the east side and the west side are connected in a predetermined time period. Accordingly, in the present embodiment, the control device 100 can effectively perform the voltage sweep. Therefore, a probability that the maximum power is obtained from the photovoltaic string is improved, and the generation of the time period during which the power from the photovoltaic string is not used due to the voltage sweep can be reduced.

Fig. 3 is a view illustrating an example of time changes in output power of the photovoltaic strings 200a, 200b, and 200c of the day. The dotted line P (200a) indicates the example of the time change in output power of the photovoltaic string 200a installed on the east side of the building. The alternate long and short dash line P (200b) indicates the example of the time change in output power of the photovoltaic string 200b installed on the west side of the building. The solid line P (200ab) indicates the example of the time change in total output power of the photovoltaic strings 200a and 200b. The solid line P (200c) indicates the example of the time change in output power of the photovoltaic string 200c installed on the south side of the building.

Because the photovoltaic string 200a is installed on the east side of the building, the photovoltaic string 200a starts the generation of the output power from a clock time Tsa earlier than a clock time Tsc at which the photovoltaic string 200c installed on the south side of the building starts the generation of the output power. Because the photovoltaic string 200b is installed on the west side of the building, the photovoltaic string 200b ends the generation of the output power from a clock time Tfb later than a clock time Tfc at which the photovoltaic string 200c ends the generation of the output power. That is, the combined power of the photovoltaic strings 200a and 200b is generated from the clock time Tsa earlier than the clock time Tsc, and generated until the clock time Tfb later than the clock time Tfc.

For example, at a clock time Tn1 around the noon, the combined power of the photovoltaic strings 200a and 200b is less than the output power of photovoltaic string 200c. The combined power of the photovoltaic strings 200a and 200b hardly changes between a clock time Tn3 around 2:00 p.m. later than the clock time Tn1 and a clock time Tn2 around 10:00 a.m. earlier than the clock time Tn1.

The control device 100 may determine whether the voltage sweep is performed to each boost circuit in consideration of the characteristic of the time change in output power of the photovoltaic string.

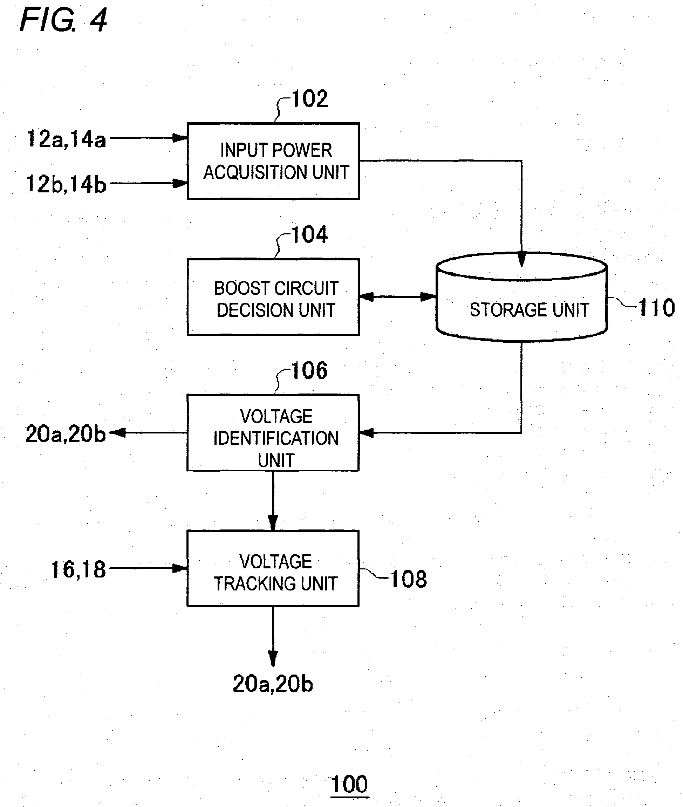

Fig. 4 is a view illustrating an example of a functional block of the control device 100. The control device 100 may be constructed by a microcomputer.

The control device 100 includes an input power acquisition unit 102, a boost circuit decision unit 104, a voltage identification unit 106, a voltage tracking unit 108, and a storage unit 110. The input power acquisition unit 102 periodically acquires the power inputted to each boost circuit and the input power of the connection unit 30 to which the power is inputted from the boost circuit. For example, the input power acquisition unit 102 acquires the input power every one hour or every 30 minutes and stores the input power in the storage unit 110. The input power acquisition unit 102 may acquire power Wab inputted to the boost circuit 20a by multiplying the voltage Vabin detected by the voltage sensor 12a and the current labin detected by the current sensor 14a. The input power acquisition unit 102 may acquire power Wc inputted to the boost circuit 20b by multiplying the voltage Vein detected by the voltage sensor 12b and the current Icin detected by the current sensor 14b. The input power acquisition unit 102 may acquire power Wout, in which the power outputted from the boost circuits 20a and 20b is combined, by multiplying the voltage Vout detected by the voltage sensor 16 and the current lout detected by the current sensor 18.

The boost circuit decision unit 104 decides the boost circuit, to which the voltage sweep is performed, based on the change in power inputted to each boost circuit with respect to the clock time. The boost circuit decision unit 104 decides the boost circuit, to which the voltage sweep is performed, when the change in power inputted to each boost circuit with respect to the clock time satisfies a predetermined condition.

The boost circuit decision unit 104 may decide that the boost circuit is the target boost circuit to which the voltage sweep is performed when the boost circuit satisfies a condition A. In the condition A, a start clock time Ts at which the input voltage at the boost circuit reaches a reference voltage Vth1 is earlier than a reference start clock time Tsth, and an end clock time Tf at which the input voltage at the boost circuit falls below a reference voltage Vth2 is later than a reference end clock time Tfth.

The reference voltage Vth1 may be a minimum voltage necessary for the boost circuit to perform the boost operation using the power from the photovoltaic string. The reference voltage Vth2 may be a voltage at which the boost circuit becomes unable to perform the boost operation using the power from the photovoltaic string. The reference voltage Vth1 and the reference voltage Vth2 may be equal to each other.

The reference start clock time Tsth may be a clock time at which the voltage at the photovoltaic string installed on the south side of the building reaches the reference voltage Vth1. The reference end clock time Tfth may be a clock time at which the voltage at the photovoltaic string installed on the south side of the building falls below the reference voltage Vth2.

In the case where the condition A is satisfied, possibly the power inputted to the boost circuit exerts the power characteristic in Fig. 3, and possibly the combined power of the photovoltaic strings installed on the east and west sides of the building is inputted to the boost circuit. In the boost circuit, as illustrated in Fig. 2, possibly the plurality of the input voltages at the boost circuit, at which the input power of the boost circuit is maximized, emerge in the morning and the late afternoon. For this reason, the boost circuit decision unit 104 may decide that the boost circuit satisfying the condition A is the target boost circuit to which the voltage sweep is performed.

The boost circuit decision unit 104 may decide that the boost circuit is the target boost circuit to which the voltage sweep is performed when the boost circuit satisfies the condition A and a condition B. In the condition B, the input power of the boost circuit at a reference intermediate clock time Tmth between the reference start clock time Tsth and the reference end clock time Tfth is less than or equal to the input power of the other boost circuit by a reference difference ΔW1. The reference intermediate clock time Tmth may be the noon. When the boost circuit satisfies the condition B, possibly the photovoltaic string installed on at least one of the east and west sides of the building is connected to the boost circuit, and the photovoltaic string installed on the south side of the building is connected to the other boost circuit. Therefore, when the boost circuit satisfies the condition A and the condition B, the boost circuit decision unit 104 determines that possibly the combined power of the photovoltaic strings installed on the east and west sides of the building is inputted to the boost circuit, and decides that the boost circuit is the target boost circuit to which the voltage sweep is performed.

The boost circuit decision unit 104 may decide that the boost circuit is the boost circuit to which the voltage sweep is performed when the boost circuit satisfies a condition C. In the condition C, an amount of change in input power of the boost circuit in a predetermined first time period falls within a predetermined reference range. For example, the first time period may be a time period from 10:00 a.m. to 2:00 p.m. As illustrated in Fig. 3, for the small amount of change in input power of the boost circuit in the time period, possibly the combined power of the photovoltaic strings installed on the east and west sides of the building is inputted to the boost circuit. Therefore, the boost circuit decision unit 104 may decide that the boost circuit is the boost circuit to which the voltage sweep is performed when the boost circuit satisfies the condition C.

The boost circuit decision unit 104 may decide that the boost circuit is the boost circuit to which the voltage sweep is performed when the boost circuit satisfies a condition D. In the condition D, a difference between the input power of the boost circuit at the predetermined first clock time and the input power of the boost circuit at a second clock time earlier than the first clock time is less than or equal to a reference difference ΔW2, and a difference between the input power of the boost circuit at the predetermined first clock time and the input power of the boost circuit at a third clock time earlier than the first clock time is less than or equal to a reference difference ΔW3. As described above, in the case where the combined power of the photovoltaic strings installed on the east and west sides of the building is inputted to the boost circuit, for example, the input power of the boost circuit hardly changes in the time period from 10:00 a.m. to 2:00 p.m. For example, possibly the photovoltaic strings installed on the east and west sides of the building is connected to the boost circuit, in the case where the difference between the input power of the boost circuit at noon and the input power of the boost circuit at 10:00 a.m. is less than or equal to a reference difference ΔW2 while the difference between the input power of the boost circuit at noon and the input power of the boost circuit at 2:00 p.m. is less than or equal to a reference difference ΔW3. Therefore, the boost circuit decision unit 104 may decide that the boost circuit is the boost circuit to which the voltage sweep is performed when the boost circuit satisfies the condition D. The reference difference ΔW2 and the reference difference ΔW3 may be equal to each other.

The boost circuit decision unit 104 may decide that the boost circuit is the boost circuit to which the voltage sweep is performed when the boost circuit satisfies at least two of the conditions A, B, C, and D.

The boost circuit decision unit 104 may decide that the boost circuit is the boost circuit to which the voltage sweep is performed when the change in input power or output power of the boost circuit with respect to the input voltage at the boost circuit satisfies a predetermined condition. For example, the boost circuit decision unit 104 performs the voltage sweep to each boost circuit in the morning and the late afternoon at predetermined timing, at a time the power conditioner 10 is installed, four times a year, and the like, and determines whether the plural maxima emerge in the power inputted to the boost circuit. When the plural maxima emerge, the boost circuit decision unit 104 may determine that possibly the combined power of the photovoltaic strings installed on the east and west sides of the building is inputted to the boost circuit, and decide that the boost circuit is the target boost circuit to which the voltage sweep is performed.

The boost circuit decision unit 104 may decide the timing when the voltage sweep is performed based on the start clock time Ts and the end clock time Tf of the boost circuit to which the voltage sweep is performed. For example, the boost circuit decision unit 104 may decide at least one time of the timing between one hour later from the start clock time Ts and one hour before from the end clock time Tf as the timing when the voltage sweep is performed. The boost circuit decision unit 104 may identify the time period having the high possibility that the maximum emerges from a result of the voltage sweep performed at the time the power conditioner 10 is installed, four times a year, and the like, and the boost circuit decision unit 104 may decide the identified time period as the timing when the voltage sweep is performed.

As described above, the input power acquisition unit 102 periodically acquires the input power of each boost circuit and stores the input power of each boost circuit in the storage unit 110. Accordingly, the boost circuit decision unit 104 may calculate average input power by averaging the input power of each time period acquired by the input power acquisition unit 102 in a predetermined period, for example, one week or two weeks, and decide the boost circuit to which the voltage sweep is performed based on each average input power.

The boost circuit decision unit 104 stores the boost circuit, to which the boost circuit decision unit 104 decides to perform the voltage sweep based on the condition, and the clock time at which the voltage sweep is performed to the boost circuit in the storage unit 110 while correlating the boost circuit and the clock time to each other.

When the change in input power or output power of the boost circuit with respect to the clock time or the change in input power or output power of the boost circuit with respect to the input voltage at the boost circuit satisfies a predetermined condition, the voltage identification unit 106 identifies the input voltage at the boost circuit at which the output power of the boost circuit is maximized at the timing corresponding to the condition. The voltage identification unit 106 identifies the input voltage at the boost circuit, at which the input power of the boost circuit is maximized, by performing the voltage sweep to the boost circuit to which the boost circuit decision unit 104 decides to perform the voltage sweep.

The voltage identification unit 106 gradually decreases the input voltage at the boost circuit to a lower-limit input voltage at which the boost circuit can perform the boost operation from an upper-limit input voltage corresponding to an open voltage at the photovoltaic string connected to the boost circuit by changing the boost ratio of the boost circuit, and the voltage identification unit 106 performs the voltage sweep by searching the input voltage at the boost circuit corresponding to the maximum combined power in the detected combined power Wout of the connection unit 30.

The voltage tracking unit 108 tracks the input voltage at each boost circuit at which the output power of the boost circuit is maximized while changing the input voltage at the boost circuit. The voltage tracking unit 108 may track the input voltage at each boost circuit, at which the output power of the boost circuit is maximized, by the MPPT control.

The voltage tracking unit 108 individually controls the boost ratios of the boost circuits 20a and 20b by individually controlling the switches Tra and Trb of the boost circuits 20a and 20b, and tracks the input voltages at the boost circuits 20a and 20b at which the output power of the boost circuits 20a and 20b is maximized. The voltage tracking unit 108 multiplies the voltage Vout from the voltage sensor 16 and the current lout from the current sensor 18 while changing the boost ratios of the boost circuits 20a and 20b, thereby calculating the combined power Wout of the connection unit 30 as needed basis, and the voltage tracking unit 108 controls the input voltages at the boost circuits 20a and 20b such that the calculated combined power Wout is maximized.

When the change in input power or output power of each boost circuit with respect to the clock time or the change in input power or output power of each boost circuit with respect to the input voltage at the boost circuit satisfies a predetermined condition, the voltage tracking unit 108 identifies the input voltage at each boost circuit at which the output power of the boost circuit is maximized at the timing corresponding to the condition.

When the voltage identification unit 106 identifies the input voltage at the boost circuit at which the input power of the boost circuit that is of the target of the voltage seep is maximized, the voltage tracking unit 108 tracks the input voltage at the boost circuit at which the output power of the boost circuit is maximized while changing the input voltage at the boost circuit with the input voltage based on the input voltage at the identified boost circuit as the starting point. When the voltage identification unit 106 identifies the input voltage at the boost circuit at which the combined power Wout of the connection unit 30 is maximized by the voltage sweep, the voltage tracking unit 108 may track the input voltage at the boost circuit at which the output power of the boost circuit is maximized by the MPPT control with the input voltage at the identified boost circuit as the starting point.

As described above, when the change in input power or output power of the boost circuit with respect to the clock time or the change in input power or output power of the boost circuit with respect to the input voltage at the boost circuit satisfies the predetermined condition, the boost circuit decision unit 104 decides the boost circuit satisfying the condition as the target boost circuit to which the voltage sweep is performed. The voltage identification unit 106 periodically performs the voltage sweep to the boost circuit in a predetermined period from the timing corresponding to the predetermined condition, for example, from the start clock time at which the input voltage at the boost circuit satisfying the predetermined condition reaches the reference voltage Vth1. The voltage identification unit 106 periodically performs the voltage sweep to the boost circuit from the predetermined time before the end clock time, at which the input voltage at the boost circuit falls below the reference voltage Vth2, until the end clock time. Thus, the voltage sweep is performed to the boost circuit, in which possibly the plural maxima of the input power of the boost circuit exist with respect to the input voltage at the boost circuit, in the period during which possibly the plural maxima of the input power of the boost circuit exist with respect to the input voltage at the boost circuit.

Only in the time period having the possibility that the power obtained from the photovoltaic string increases, the voltage identification unit 106 performs the voltage sweep to the boost circuit having the possibility that the power increases rather than the case that the MPPT control is simply performed. Therefore, a probability that the maximum power is obtained from the photovoltaic string is improved, and the generation of the time period during which the power from the photovoltaic string is not effectively used due to the voltage sweep can be reduced.

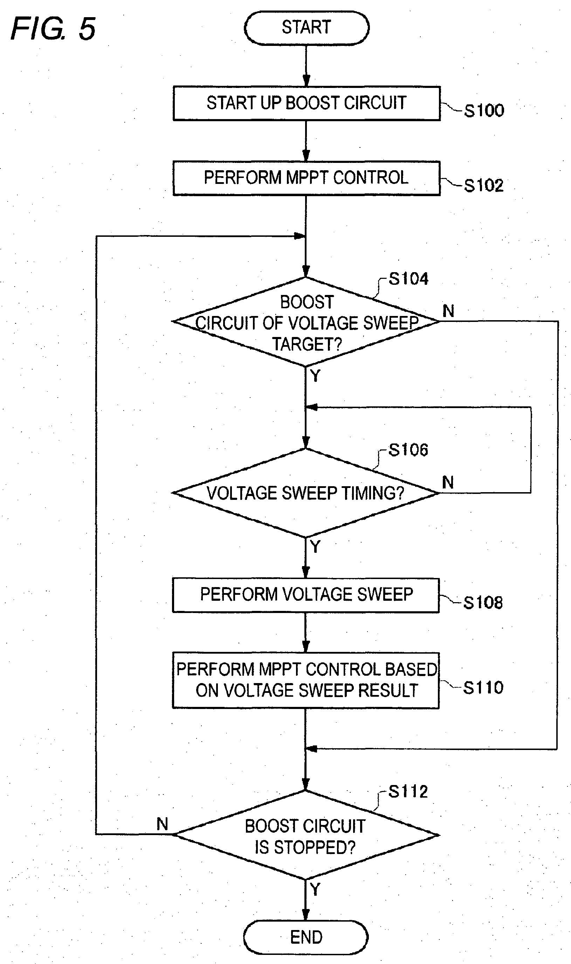

Fig. 5 is a flowchart illustrating a boost circuit control procedure of the control device 100 when the voltage outputted from one of the photovoltaic strings reaches the reference voltage Vth1.

When being started up by the driving power from the power supply 60, the control device 100 issues an instruction to the boost circuits 20a and 20b to start the boost operation. In response to the instruction, the boost circuits 20a and 20b turn on and off the switches Tra and Trb to start the boost operation (S100). When the voltage at the photovoltaic string connected to the boost circuit does not reach the reference voltage Vth1, the control device 100 tentatively stops the boost operation, and issues the instruction to the boost circuit to start the boost operation again after a predetermined period elapses.

The voltage tracking unit 108 performs the MPPT control to the boost circuit to which the boost operation can be performed, and the voltage tracking unit 108 tracks the input voltage at the boost circuit at which the input power of the boost circuit is maximized (S102). The voltage tracking unit 108 refers to the storage unit 110 to determine whether the boost circuit that continues the boost operation includes the target boost circuit to which the voltage sweep is performed (S104): For example, the voltage tracking unit 108 determines that the target boost circuit to which the voltage sweep is performed is included when the boost circuit 20a continues the boost operation.

When the boost circuit that continues the boost operation includes the target boost circuit to which the voltage sweep is performed, the voltage identification unit 106 refers to the storage unit 110 to identify the execution timing of the voltage sweep correlated to the target boost circuit. In the case of the execution timing of the voltage sweep, for example, when the present time is included in the specific time period of the morning or the late afternoon, the voltage identification unit 106 performs the voltage sweep to the target boost circuit (S108). The voltage identification unit 106 gradually decreases the input voltage at the boost circuit to the lower-limit input voltage at which the boost circuit can perform the boost operation from the upper-limit input voltage corresponding to the open voltage at the photovoltaic string connected to the boost circuit by changing the boost ratio of the boost circuit, and the voltage identification unit 106 searches the input voltage at the boost circuit corresponding to the maximum combined power in the detected combined power Wout of the connection unit 30, and identifies the input voltage at the boost circuit corresponding to the maximum output power.

The voltage tracking unit 108 performs the MPPT control based on the result of the voltage sweep performed by the voltage identification unit 106 (S110). The voltage tracking unit 108 may continue the MPPT control performed to the boost circuit with the input voltage at the boost circuit corresponding to the maximum combined power identified by the voltage identification unit 106 as the starting point.

Unless the boost circuit is stopped, the control device 100 repeatedly performs the pieces of processing from Step S104 to Step S112.

As described above, according to the present embodiment, the voltage identification unit 106 performs the voltage sweep to the boost circuit having the possibility that the power obtained from the photovoltaic string increases only in the time period having the possibility that the power increases rather than the case that the MPPT control is simply performed. Therefore, the probability that the maximum power is obtained from the photovoltaic string is improved, and the generation of the time period during which the power from the photovoltaic string is not effectively used due to the voltage sweep can be reduced.

Each unit included in the control device 100 of the present embodiment may be constructed by installing a computer-readable program, which is recorded in a recording medium to perform various pieces of processing of tracking an optimum operating point of the boost circuit, and causing the computer to execute the program. That is, the computer acts as each unit included in the control device 100 by causing the computer to execute the program, which performs various pieces of processing of tracking an optimum operating point of the boost circuit, whereby the control device 100 may be constructed.

The computer includes a CPU, various memories such as a ROM, a RAM, and an EEPROM (registered trademark), a communication bus, and an interface, and the CPU reads and executes sequentially the processing program previously stored in the ROM as firmware, whereby the computer acts as the control device 100.

In the performance sequence of pieces of processing such as the operations, the procedures, the steps, and the stages in the device, the system, the program, and the method in the claims, the description, and the drawings, "before" or "prior to" is not described unless otherwise noted, and it is noted that the pieces of processing are performed in any performance sequence as long as the output of the preceding processing is used in the subsequent processing. In the operation flow of the claims, the description, and the drawings, for the sake of convenience, it is not always necessary that the pieces of processing be performed in this order even if "at first" or "then" is used.

## Claims

1. A converter unit comprising:
a first converter circuit (20a);
a voltage tracking unit (108) configured to change an input voltage to the first converter circuit (20a) and to track the input voltage from the first converter circuit (20a) at which an amount of output power from the first converter circuit (20a) is maximized; and
a voltage identification unit (106) configured to identify the input voltage to the first converter circuit (20a) at which the amount of output power from the first converter circuit (20a) is maximized, when a change in the input power or the output power of the first converter circuit (20a) with respect to a period of time or a change in input power or output power of the first converter circuit (20a) with respect to the input voltage at the first converter circuit (20a) satisfies a predetermined condition,
wherein, when the voltage identification unit (106) identifies the input voltage to the first converter circuit (20a) at which the amount of the output power from the first converter circuit (20a) is maximized, the voltage tracking unit (108) is adapted to track the input voltage at the first converter circuit (20a) at which the amount of the output power of the first converter circuit (20a) is maximized and to change the input voltage at the first converter circuit (20a) with the identified input voltage at the first converter circuit (20a) as a starting point,
**characterized in that**:
the first converter circuit (20a) is a boost circuit, the converter unit is a boost unit, and
the voltage identification
unit (106) is adapted to Identify the input voltage at the first boost circuit (20a) at which the output power of the first boost circuit (20a) is maximized based on at least one of a first start clock time and a first end clock time when the first start clock time at which the input voltage at the first boost circuit (20a) reaches a first reference voltage is earlier than a reference start clock time and when the first end clock time at which the input voltage at the first boost circuit (20a) falls below a second reference voltage is later than a reference end clock time.

2. The boost unit according to claim 1, further comprising
a second boost circuit (20b),
wherein the boost unit is adapted to fix the reference start clock time based on a second start clock time at which the input voltage at the second boost circuit (20b) reaches the first reference voltage, and wherein
the boost unit is adapted to fix the reference end clock time based on a second end clock time at which the input voltage at the second boost circuit (20b) falls below the second reference voltage.

3. The boost unit according to claim 2, wherein the voltage identification unit (106) is adapted to identify the input voltage at the first boost circuit (20a) at which the output power of the first boost circuit (20a) is maximized, when the first start clock time is earlier than the reference start clock time, when the first end clock time is later than the reference end clock time, and when the input power of the first boost circuit (20a) is less than the input power of the second boost circuit (20b) by a first reference difference at a reference intermediate clock time between the reference start clock time and the reference end clock time.

4. The boost unit according to any one of claims 1 to 3, wherein the voltage identification unit (106) is adapted to identify, when an amount of change in input power of the first boost circuit (20a) falls within a predetermined reference range in a first time period, the input voltage at the first boost circuit (20a) at which the output power of the first boost circuit (20a) is maximized at a timing corresponding to the condition.

5. The boost unit according to any one of claims 1 to 4, wherein the voltage identification unit (106) is adapted to identify, when a difference between the input power of the first boost circuit (20a) at a predetermined first clock time and the input power of the first boost circuit (20a) at a predetermined second clock time earlier than the first clock time Is less than or equal to a second reference difference and when a difference between the input power of the first boost circuit (20a) at the first clock time and the input power of the first boost circuit (20a) at a third clock time earlier than the first clock time is less than or equal to a third reference difference, the input voltage at the first boost circuit (20a) at which the output power of the first boost circuit (20a) is maximized at a timing corresponding to the condition.

6. The boost unit according to any one of claims 1 to 5, wherein the voltage identification unit (106) is adapted to identify, when a plurality of maxima of the input power of the first boost circuit (20a) is estimated to have a high probability to exist by changing the input voltage at the first boost circuit (20a), the input voltage at the first boost circuit (20a) at which the output power of the first boost circuit (20a) is maximized at a timing corresponding to a clock time at which the plurality of maxima of the input power of the boost circuit is estimated to have a high probability to exist.

7. The boost unit according to any one of claims 1 to 6, wherein the voltage identification unit (106) is adapted to identify the input voltage at the first boost circuit (20a) at which the output power of the first boost circuit is maximized by changing the input voltage at the first boost circuit (20a) to a lower-limit input voltage from an upper-limit input voltage at the first boost circuit (20a).

8. A power conditioner (10) comprising:
the boost unit according to any one of claims 1 to 7; and
an inverter (40) configured to convert a direct current outputted from the first boost circuit (20a) into an alternating current.

9. A photovoltaic system comprising:
the power conditioner (10) according to claim 8; and
at least one photovoltaic string (200a,200b,200c) in which the voltage is boosted by the first boost circuit (20a).

10. A voltage tracking method comprising:
a step of tracking an input voltage at a first converter circuit (20a) while changing the input voltage at the first converter circuit (20a), an output power of the first converter circuit (20a) being maximized at the input
voltage;
a step of identifying, when a change in input power or output power of the first converter circuit (20a) satisfies a predetermined condition, the input voltage at the first converter circuit (20a) at which the output power of the first converter circuit is maximized at timing corresponding to the condition; and
a step of tracking, when the input voltage at the first converter circuit (20a) at which the output power of the first boost circuit is maximized is identified, the input voltage at the first converter beest circuit (20a) at which the output power of the first converter circuit (20a) is maximized while changing the input voltage at the first converter circuit (20a) with the identified input voltage at the first converter
circuit (20a) as a starting point,
**characterized in that**:
the first converter circuit (20a) is a boost circuit and
in the identifying step, the input voltage at the first boost circuit (20a) at which the output power of the first boost circuit (20a) is maximized is identified based on at least one of a first start clock time and a first end clock time when the first start clock time at which the input voltage at the first boost circuit (20a) reaches a first reference voltage is earlier than a reference start clock time and when the first end clock time at which the input voltage at the first boost circuit (20a) falls below a second reference voltage is later than a reference end clock time.

11. A program that causes a computer to execute the method according to claim 10.

## Patentansprüche

1. Stromwandlereinheit, umfassend:
eine erste Stromwandlerschaltung (20a);
eine Spannungsverfolgungseinheit (108), die eingerichtet ist, eine Eingangsspannung in die erste Stromwandlerschaltung (20a) zu ändern und die Eingangsspannung von der ersten Stromwandlerschaltung (20a), bei der ein Betrag einer Ausgangsleistung von der ersten Stromwandlerschaltung (20a) maximiert ist, zu verfolgen; und
eine Spannungsermittlungseinheit (106), die eingerichtet ist, die Eingangsspannung in die erste Stromwandlerschaltung (20a), bei der der Betrag der Ausgangsleistung von der ersten Stromwandlerschaltung (20a) maximiert ist, zu ermitteln, wenn eine Änderung der Eingangsleistung oder der Ausgangsleistung der ersten Stromwandlerschaltung (20a) in Bezug auf eine Zeitspanne oder eine Änderung der Eingangsleistung oder der Ausgangsleistung der ersten Stromwandlerschaltung (20a) in Bezug auf die Eingangsspannung bei der ersten Stromwandlerschaltung (20a) eine vorbestimmte Bedingung erfüllt,
wobei die Spannungsverfolgungseinheit (108) eingerichtet ist, wenn die Spannungsermittlungseinheit (106) die Eingangsspannung in die erste Stromwandlerschaltung (20a), bei der der Betrag der Ausgangsleistung von der ersten Stromwandlerschaltung (20a) maximiert ist, ermittelt, die Eingangsspannung bei der ersten Stromwandlerschaltung (20a), bei der der Betrag der Ausgangsleistung der ersten Stromwandlerschaltung (20a) maximiert ist, zu verfolgen und die Eingangsspannung bei der ersten Stromwandlerschaltung (20a) mit der ermittelten Eingangsspannung bei der ersten Stromwandlerschaltung (20a) als einen Anfangspunkt zu ändern,
**dadurch gekennzeichnet, dass**:
die erste Stromwandlerschaltung (20a) eine Verstärkungsschaltung ist, die Stromwandlereinheit eine Verstärkungseinheit ist, und
die Spannungsermittlungseinheit (106) eingerichtet ist, die Eingangsspannung bei der ersten Stromwandlerschaltung (20a), bei der die Ausgangsleistung der ersten Stromwandlerschaltung (20a) maximiert ist, basierend auf zumindest einem Element aus einer ersten Anfangsuhrzeit und einer ersten Enduhrzeit zu ermitteln, wenn die erste Anfangsuhrzeit, zu welcher die Eingangsspannung bei der ersten Stromwandlerschaltung (20a) eine erste Referenzspannung erreicht, früher als eine Referenzanfangsuhrzeit ist und wenn die erste Enduhrzeit, zu welcher die Eingangsspannung bei der ersten Stromwandlerschaltung (20a) eine zweite Referenzspannung unterschreitet, später als eine Referenzenduhrzeit ist.

2. Verstärkungseinheit nach Anspruch 1, die ferner eine zweite Verstärkungsschaltung (20b) umfasst,
wobei die Verstärkungseinheit eingerichtet ist, die Referenzanfangsuhrzeit basierend auf einer zweiten Anfangsuhrzeit, zu welcher die Eingangsspannung bei der zweiten Verstärkungsschaltung (20b) die erste Referenzspannung erreicht, festzulegen, und wobei
die Verstärkungseinheit eingerichtet ist, die Referenzenduhrzeit basierend auf einer zweiten Enduhrzeit, zu welcher die Eingangsspannung bei der zweiten Verstärkungsschaltung (20b) eine zweite Referenzspannung unterschreitet, festzulegen.

3. Verstärkungseinheit nach Anspruch 2, wobei die Spannungsermittlungseinheit (106) eingerichtet ist, die Eingangsspannung bei der ersten Verstärkungsschaltung (20a), bei der die Ausgangsleistung der ersten Verstärkungsschaltung (20a) maximiert ist, zu ermitteln, wenn die erste Anfangsuhrzeit früher als die Referenzanfangsuhrzeit ist, wenn die erste Enduhrzeit später als die Referenzenduhrzeit ist, und wenn die Eingangsleistung der ersten Verstärkungsschaltung (20a) um eine erste Referenzdifferenz zu einer Referenzzwischenuhrzeit zwischen der Referenzanfangsuhrzeit und der Referenzenduhrzeit kleiner als die Eingangsleistung der zweiten Verstärkungsschaltung (20b) ist.

4. Verstärkungseinheit nach einem der Ansprüche 1 bis 3, wobei die Spannungsermittlungseinheit (106) eingerichtet ist, wenn ein Änderungsbetrag der Eingangsleistung der ersten Verstärkungsschaltung (20a) während einer ersten Zeitspanne in einen vorbestimmten Referenzbereich fällt, die Eingangsspannung bei der ersten Verstärkungsschaltung (20a), bei der die Ausgangsleistung der ersten Verstärkungsschaltung (20a) maximiert ist, zu einem der Bedingung entsprechendem Zeitpunkt zu ermitteln.

5. Verstärkungseinheit nach einem der Ansprüche 1 bis 4, wobei die Spannungsermittlungseinheit (106) eingerichtet ist, wenn eine Differenz zwischen der Eingangsspannung der ersten Verstärkungsschaltung (20a) zu einer vorbestimmten ersten Uhrzeit und der Eingangsspannung der ersten Verstärkungsschaltung (20a) zu einer vorbestimmten zweiten Uhrzeit, die früher als die erste Uhrzeit ist, kleiner oder gleich einer zweiten Referenzdifferenz ist und wenn eine Differenz zwischen der Eingangsspannung der ersten Verstärkungsschaltung (20a) zu der ersten Uhrzeit und der Eingangsspannung der ersten Verstärkungsschaltung (20a) zu einer dritten Uhrzeit, die früher als die erste Uhrzeit ist, kleiner oder gleich einer dritten Referenzdifferenz ist, die Eingangsspannung bei der ersten Verstärkungsschaltung (20a), bei der die Ausgangsleistung der ersten Verstärkungsschaltung (20a) maximiert ist, zu einem der Bedingung entsprechendem Zeitpunkt zu ermitteln.

6. Verstärkungseinheit nach einem der Ansprüche 1 bis 5, wobei die Spannungsermittlungseinheit (106) eingerichtet ist, wenn geschätzt wird, dass durch Änderung der Eingangsspannung bei der ersten Verstärkungsschaltung (20a) das Vorliegen einer Vielzahl von Maxima der Eingangsleistung der ersten Verstärkungsschaltung (20a) eine hohe Wahrscheinlichkeit hat, die Eingangsspannung bei der ersten Verstärkungsschaltung (20a), bei der die Ausgangsleistung der ersten Verstärkungsschaltung (20a) maximiert ist, zu einem einer Uhrzeit entsprechenden Zeitpunkt zu ermitteln, zu welcher geschätzt wird, dass das Vorliegen der Vielzahl von Maxima der Eingangsleistung der Verstärkungsschaltung eine hohe Wahrscheinnlichkeit hat.

7. Verstärkungseinheit nach einem der Ansprüche 1 bis 6, wobei die Spannungsermittlungseinheit (106) eingerichtet ist, durch Änderung der Eingangsspannung bei der ersten Verstärkungsschaltung (20a) von einer oberen Eingangsspannungsgrenze zu einer unteren Eingangsspannungsgrenze bei der ersten Verstärkungsschaltung (20a) die Eingangsspannung bei der ersten Verstärkungsschaltung (20a), an der die Ausgangsleistung der ersten Verstärkungsschaltung (20a) maximiert ist, zu ermitteln.

8. Wechselrichter (10), umfassend:
die Verstärkungseinheit nach einem der Ansprüche 1 bis 7; und
einen Inverter (40), der eingerichtet ist, einen von der ersten Verstärkungsschaltung (20a) ausgegebenen Gleichstrom in einen Wechselstrom umzuwandeln.

9. Fotovoltaiksystem, umfassend:
den Wechselrichter (10) nach Anspruch 8; und
zumindest einen Fotovoltaikstring (200a, 200b, 200c), in dem die Spannung durch die erste Verstärkungsschaltung (20a) verstärkt wird.

10. Spannungsverfolgungsverfahren, umfassend:
einen Schritt des Verfolgens einer Eingangsspannung bei einer ersten Stromwandlerschaltung (20a) während die Eingangsspannung bei der ersten Stromwandlerschaltung (20a) verändert wird, wobei eine Ausgangsleistung der ersten Stromwandlerschaltung (20a) bei der Eingangsspannung maximiert ist;
einen Schritt des Ermittelns, wenn eine Änderung der Eingangsleistung oder der Ausgangsleistung der ersten Stromwandlerschaltung (20a) eine vorbestimmte Bedingung erfüllt, der Eingangsspannung bei der ersten Stromwandlerschaltung (20a), an der die Ausgangsleistung der ersten Stromwandlerschaltung maximiert ist, zu einem der Bedingung entsprechendem Zeitpunkt; und
einen Schritt des Verfolgens, wenn die Eingangsspannung bei der ersten Stromwandlerschaltung (20a), an der die Ausgangsleistung der ersten Stromwandlerschaltung (20a) maximiert ist, ermittelt wird, der Eingangsleistung bei der ersten Stromwandlerschaltung (20a), an der die Ausgangsleistung der ersten Stromwandlerschaltung (20a) maximiert ist, während die Eingangsspannung bei der ersten Stromwandlerschaltung (20a) mit der ermittelten Eingangsspannung bei der ersten Stromwandlerschaltung (20a) als einen Anfangspunkt, geändert wird,
**dadurch gekennzeichnet, dass**:
die erste Stromwandlerschaltung (20a) eine Verstärkungsschaltung ist, und
in dem Schritt des Ermittelns, die Eingangsspannung bei der ersten Verstärkungsschaltung (20a), an der die Ausgangsleistung der ersten Verstärkungsschaltung (20a) maximiert ist, basierend auf zumindest einem Element aus einer ersten Anfangsuhrzeit und einer ersten Enduhrzeit ermittelt wird, wenn die erste Anfangsuhrzeit, zu welcher die Eingangsspannung bei der ersten Verstärkungsschaltung (20a) eine erste Referenzspannung erreicht, früher als eine Referenzanfangsuhrzeit ist und wenn die erste Enduhrzeit, zu welcher die Eingangsspannung bei der ersten Verstärkungsschaltung (20a) eine zweite Referenzspannung unterschreitet, später als eine Referenzenduhrzeit ist.

11. Programm, welches bewirkt, dass ein Computer das Verfahren nach Anspruch 10 ausführt.

## Revendications

1. Unité de conversion qui comprend :
un premier circuit de conversion (20a) ;
une unité de suivi de tension (108) configurée pour modifier une tension d'entrée du premier circuit de conversion (20a) et pour suivre la tension d'entrée du premier circuit de conversion (20a) à laquelle une quantité de puissance délivrée par le premier circuit de conversion (20a) est maximisée ; et
une unité d'identification de tension (106) configurée pour identifier la tension d'entrée du premier circuit de conversion (20a) à laquelle la quantité de puissance délivrée par le premier circuit de conversion (20a) est maximisée, lorsqu'un changement de puissance d'entrée ou de puissance de sortie du premier circuit de conversion (20a) par rapport à une période de temps ou un changement de puissance d'entrée ou de puissance de sortie du premier circuit de conversion (20a) par rapport à la tension d'entrée au niveau du premier circuit de conversion (20a) satisfait une condition prédéterminée,
dans laquelle, lorsque l'unité d'identification de tension (106) identifie la tension d'entrée du premier circuit de conversion (20a) à laquelle la quantité de puissance délivrée par le premier circuit de conversion (20a) est maximisée, l'unité de suivi de tension (108) est adaptée pour suivre la tension d'entrée au niveau du premier circuit de conversion (20a) à laquelle la quantité de puissance de sortie du premier circuit de conversion (20a) est maximisée, et pour modifier la tension d'entrée au niveau du premier circuit de conversion (20a) avec la tension d'entrée identifiée au niveau du premier circuit de conversion (20a) comme point de départ, **caractérisé en ce que** :
le premier circuit de conversion (20a) est un circuit de survoltage, l'unité de conversion est une unité de survoltage, et
l'unité d'identification de tension (106) est adaptée pour identifier la tension d'entrée au niveau du premier circuit de survoltage (20a) à laquelle la puissance de sortie du premier circuit de survoltage (20a) est maximisée sur la base d'au moins l'une d'une première heure de début et d'une première heure de fin lorsque la première heure de début à laquelle la tension d'entrée au niveau du premier circuit de survoltage (20a) atteint une première tension de référence est antérieure à une heure de début de référence, et lorsque la première heure de fin à laquelle la tension d'entrée au niveau du premier circuit de survoltage (20a) devient inférieure à une seconde tension de référence est postérieure à une heure de fin de référence.

2. Unité de survoltage selon la revendication 1, qui comprend en outre
un second circuit de survoltage (20b),
l'unité de survoltage étant adaptée pour fixer l'heure de début de référence sur la base d'une seconde heure de début à laquelle la tension d'entrée au niveau du second circuit de survoltage (20b) atteint la première tension de référence, et
l'unité de survoltage étant adaptée pour fixer l'heure de fin de référence sur la base d'une seconde heure de fin à laquelle la tension d'entrée au niveau du second circuit de survoltage (20b) devint inférieure à la seconde tension de référence.

3. Unité de survoltage selon la revendication 2, dans laquelle l'unité d'identification de tension (106) est adaptée pour identifier la tension d'entrée au niveau du premier circuit de survoltage (20a) à laquelle la puissance de sortie du premier circuit de survoltage (20a) est maximisée, lorsque la première heure de début est antérieure à l'heure de début de référence, lorsque la première heure de fin est postérieure à l'heure de fin de référence, et lorsque la puissance d'entrée du premier circuit de survoltage (20a) est inférieure à la puissance d'entrée du second circuit de survoltage (20b) selon une première différence de référence à une heure intermédiaire de référence entre l'heure de début de référence et l'heure de fin de référence.

4. Unité de survoltage selon l'une quelconque des revendications 1 à 3, dans laquelle l'unité d'identification de tension (106) est adaptée pour identifier, lorsqu'une quantité de changement de puissance d'entrée du premier circuit de survoltage (20a) devient inférieure à une plage de référence prédéterminée pendant une première période de temps, la tension d'entrée au niveau du premier circuit de survoltage (20a) à laquelle la puissance de sortie du premier circuit de survoltage (20a) est maximisée à un moment qui correspond à la condition.

5. Unité de survoltage selon l'une quelconque des revendications 1 à 4, dans laquelle l'unité d'identification de tension (106) est adaptée pour identifier, lorsqu'une différence entre la puissance d'entrée du premier circuit de survoltage (20a) à une première heure prédéterminée et la puissance d'entrée du premier circuit de survoltage (20a) à une seconde heure prédéterminée antérieure à la première heure est inférieure ou égale à une seconde différence de référence, et, lorsqu'une différence entre la puissance d'entrée du premier circuit de survoltage (20a) à la première heure et la puissance d'entrée du premier circuit de survoltage (20a) à une troisième heure antérieure à la première heure est inférieur ou égale à une troisième différence de référence, la tension d'entrée au niveau du premier circuit de survoltage (20a) à laquelle la puissance de sortie du premier circuit de survoltage (20a) est maximisée à un moment qui correspond à la condition.

6. Unité de survoltage selon l'une quelconque des revendications 1 à 5, dans laquelle l'unité d'identification de tension (106) est adaptée pour identifier, lorsque plusieurs valeurs maximales de la puissance d'entrée du premier circuit de survoltage (20a) sont estimées comme présentant une forte probabilité d'exister en modifiant la tension d'entrée au niveau du premier circuit de survoltage (20a), la tension d'entrée au niveau du premier circuit de survoltage (20a) à laquelle la puissance de sortie du premier circuit de survoltage (20a) est maximisée à un moment qui correspond à une heure à laquelle les valeurs maximales de la puissance d'entrée du circuit de survoltage sont estimées comme présentant une forte probabilité d'exister.

7. Unité de survoltage selon l'une quelconque des revendications 1 à 6, dans laquelle l'unité d'identification de tension (106) est adaptée pour identifier la tension d'entrée au niveau du premier circuit de survoltage (20a) à laquelle la puissance de sortie du premier circuit de survoltage est maximisée en modifiant la tension d'entrée au niveau du premier circuit de survoltage (20a) en la faisant passer d'une tension d'entrée supérieure à une tension d'entrée inférieure au niveau du premier circuit de survoltage (20a).

8. Conditionneur d'énergie (10) qui comprend :
l'unité de survoltage selon l'une quelconque des revendications 1 à 7 ; et
un inverseur (40) configuré pour convertir un courant continu délivré par le premier circuit de survoltage (20a) en un courant alternatif.

9. Système photovoltaïque qui comprend :
le conditionneur d'énergie (10) selon la revendication 8 ; et
au moins une chaîne photovoltaïque (200a, 200b, 200c) dans laquelle la tension est survoltée par le premier circuit de survoltage (20a).

10. Procédé de suivi de tension qui comprend :
une étape de suivi d'une tension d'entrée au niveau d'un premier circuit de conversion (20a) tout en modifiant la tension d'entrée au niveau du premier circuit de conversion (20a), une puissance de sortie du premier circuit de conversion (20a) étant maximisée à la tension d'entrée ;
une étape d'identification, lorsqu'un changement de puissance d'entrée ou de puissance de sortie du premier circuit de conversion (20a) satisfait une condition prédéterminée, de la tension d'entrée au niveau du premier circuit de conversion (20a) à laquelle la puissance de sortie du premier circuit de conversion est maximisée à un moment qui correspond à la condition ; et
une étape de suivi, lorsque la tension d'entrée au niveau du premier circuit de conversion (20a) à laquelle la puissance de sortie du premier circuit de survoltage est maximisée est identifiée, de la tension d'entrée au niveau du premier circuit de conversion (20a) à laquelle la puissance de sortie du premier circuit de conversion (20a) est maximisée tout en modifiant la tension d'entrée du premier circuit de conversion (20a) avec la tension d'entrée identifiée au niveau du premier circuit de conversion (20a) comme point de départ, **caractérisé en ce que** :
le premier circuit de conversion (20a) est un circuit de survoltage, et
à l'étape d'identification, la tension d'entrée au niveau du premier circuit de survoltage (20a) à laquelle la puissance de sortie du premier circuit de survoltage (20a) est maximisée est identifiée sur la base d'au moins l'une d'une première heure de début et d'une première heure de fin lorsque la première heure de début à laquelle la tension d'entrée au niveau du premier circuit de survoltage (20a) atteint une première tension de référence est antérieure à une heure de début de référence, et lorsque la première heure de fin à laquelle la tension d'entrée au niveau du premier circuit de survoltage (20a) devient inférieure à une seconde tension de référence est postérieure à une heure de fin de référence.

11. Programme qui permet à un ordinateur d'exécuter le procédé selon la revendication 10.
